# EUROPEAN PATENT APPLICATION

(11) **EP 1 906 038 A2**
(43) Date of publication of application: **02.04.2008**
(21) Application number: 07018859.4
(22) Date of filing: 25.09.2007
(51) Int. Cl.: F16C 29/08

(54) **Linear guide apparatus and end caps**

(30) Priority: 29.09.2006 JP 2006268701
(71) Applicant: NSK Ltd., Tokyo 141-8560 (JP)
(72) Inventor: Matsumura, Keisuke, Fujisawa-shi, Kanagawa 251-8501 (JP); Mizumura, Yoshinori, Fujisawa-shi, Kanagawa 251-8501 (JP)
(74) Representative: Grünecker, Kinkeldey, Stockmair & Schwanhäusser Anwaltssozietät

(57) **Abstract**

End caps (3b) of a linear guide apparatus are made from a resin having an izod impact strength with notch of 10.5 kJ/m² or greater. Because of this, the occurrence of damage such as chipping or cracking to the end caps can be prevented, thereby making it possible to enhance the durability of the end caps when a linear guide apparatus is driven at high speeds.

## Description

### BACKGROUND OF THE INVENTION

### 1. Field of the Invention

The present invention relates to a linear guide apparatus having a plurality of rolling elements which freely roll in a plurality of rolling element rolling paths formed between a guide rail and a slider.

### 2. Description of Related Art

Conventionally, as linear guide apparatuses of this type, there has been proposed, for example, a linear guide apparatus which is configured to include a guide rail which extends linearly, a slider having a rolling element rolling groove which faces a rolling element rolling groove formed on the guide rail and provided in such a manner as to straddle the guide rail, and a plurality of steel balls which are inserted between the rolling element rolling groove of the guide rail and the rolling element rolling groove of the slider (a rolling element rolling path), wherein the slider is made to slide relatively along longitudinal directions of the guide rail.

In the linear guide apparatus that has been described above, the slider normally is configured to include a slider main body having a rolling element return path which passes through the slider main body between end faces thereof and end caps made from a resin (for example, polyacetal, polyphenylene sulfide, nylon) which each have a curved direction turning path which establishes a communication between the rolling element rolling path and the rolling element return path and which are fixed to axial end faces of the slider main body (for example, refer to Japanese Patent Unexamined Publication JP-A-07-006519).

In addition, a scoop-up portion for scooping up the rolling steel rolls is formed in the end cap in order to guide the steel rolls which roll in the rolling element rolling path smoothly into the direction turning path.

In the conventional linear guide apparatus, however, when the linear guide apparatus is driven at high speeds, because the steel balls strikes repeatedly the scoop-up portion and the direction turning portion, there has been a fear that damages such as chipping or cracking are made to the scoop-up portion and the direction turning portion.
The invention has been made in view of the related art, and a problem that the invention is to solve is to provide a linear guide apparatus and end caps therefor which can increase the durability thereof when the linear guide apparatus is driven at high speeds.

### SUMMARY OF THE INVENTION

With a view to solving the problem, according to an aspect of the invention, there is provided a linear guide apparatus including:
a guide rail;
a slider main body which slides along the guide rail;
end caps fixed to end faces of the slider main body;
a rolling element circulating path including:
   a rolling element rolling path including:
      a first rolling element rolling groove formed on a side surface of the guide rail; and
      a second rolling element rolling groove formed on the slider main body in such a manner as to face the rolling element rolling groove,
   a rolling element return path passing through the slider main body between the end faces thereof; and
   a direction turning path formed on each of the end caps so as to establish a connect the rolling element rolling path with the rolling element return path; and
a plurality of rolling elements which are rollably inserted in the rolling element circulating, wherein
the end caps are made from a resin whose izod impact strength with notch is 10.5 kJ/m² or more.

In addition, according to another aspect of the invention, there is provided an end cap for a linear guide apparatus which includes:
a guide rail;
a slider main body which slides along the guide rail;
end caps fixed to end faces of the slider main body;
a rolling element circulating path including:
   a rolling element rolling path including:
      a first rolling element rolling groove formed on a side surface of the guide rail; and
      a second rolling element rolling groove formed on the slider main body in such a manner as to face the rolling element rolling groove,
   a rolling element return path passing through the slider main body between the end faces thereof; and
   a direction turning path formed on each of the end caps so as to establish a connect the rolling element rolling path with the rolling element return path; and
a plurality of rolling elements which are rollably inserted in the rolling element circulating,
the end cap being made from a resin whose izod impact strength with notch is 10.5 kJ/m² or more.

According to the configurations that have been described above, the occurrence of chipping or cracking in the end caps can be prevented, thereby making it possible to increase the durability of the end caps when the linear slider is driven at high speeds.
In addition, in the linear guide apparatus of the invention, the first rolling element groove formed on the side surface of the guide rail may have a cross section which is formed substantially into an arc shape of quarter of a circle.
According to the configuration, the second rolling element rolling groove on the slider main body is made to have a cross section which is formed substantially into an arc shape of three-quarter of a circle, so as to increase the holding amount of the rolling elements by the slider main body to thereby be able to guide smoothly the rolling elements into the direction turning path from the rolling element rolling path, whereby since not only can impact on to a distal end portion of the scoop-up portion be reduced but also the protruding amount of the scoop-up portion is reduced, there is provided an advantage that bending stress that would otherwise be generated as a result of the rolling elements striking the scoop-up portion can be reduced to a small level.

### BRIEF DESCRIPTION OF THE DRAWINGS

Fig. 1 is a partially cutaway side view of an embodiment of a linear guide apparatus of the invention;
Fig. 2 is a side view which describes a modified example (having two rolling element rolling grooves) of the invention;
Fig. 3 is a side view which describes a modified example (in which either of rolling element rolling grooves has a cross section which is formed substantially into an ark-like shape of quarter of a circle) of the invention;
Fig. 4 is a side view which describes a modified example (in which both of rolling element rolling grooves have a cross section which is formed substantially into an ark-like shape of quarter of a circle) of the invention;
Fig. 5 is a side view which describes a modified example (in which a scoop-up portion of the type shown in Fig. 4 is not provided) of the invention;
Fig. 6 is a side view which describes a modified example (having a guide rail of a different shape) of the invention;
Fig. 7 is a side view which describes a modified example (in which a scoop-up portion of the type shown in Fig. 6 is not provided) of the invention;
Fig. 8 is a table which describes test conditions of a test carried out on end caps made from resins having different izod impact strengths with notch;
Fig. 9 is a graph which shows a relationship between izod impact strengths with notch of the end caps and sliding distances of sliders;
Fig. 10 is a table which describes test conditions of a test carried out on guide rails having rolling element rolling grooves which are different in shape; and
Fig. 11 is a graph which shows a relationship between the shapes of the rolling element rolling grooves and sliding distances of sliders.

### DETAILED DESCRIPTION OF EXEMPLARY EMBODIMENTS

Hereinafter, embodiments of a linear guide apparatus of the invention will be described based on the accompanying drawings.

### <Configuration of linear guide apparatus>

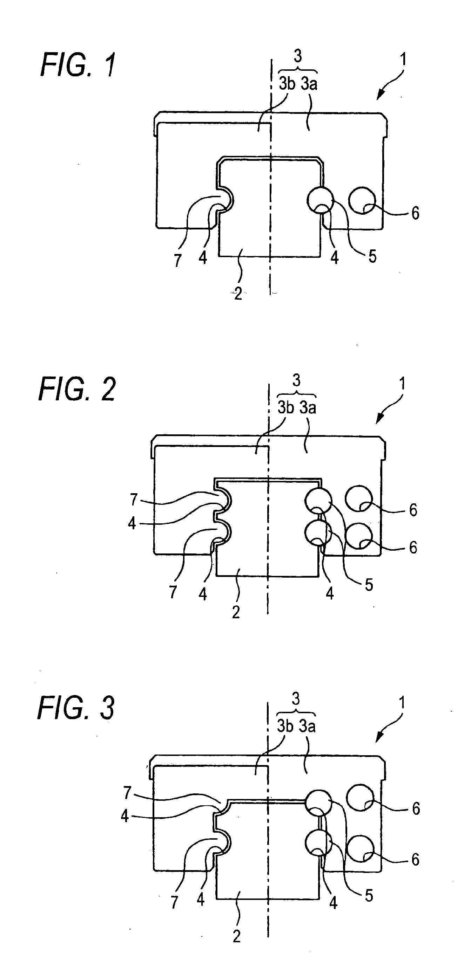

Fig. 1 is a partially cutaway side view which shows a linear guide apparatus of an embodiment of the invention.
As shown in Fig. 1, a linear guide apparatus 1 is configured to include a guide rail 2 which extends linearly, a slider 3 having a rolling element rolling groove which faces a rolling element rolling groove on the guide rail 2 and provided in such a manner as to straddle the guide rail 2, a rolling element rolling path 4 made up of the rolling element rolling groove (having a cross section which is formed substantially into an arc shape of a half of a circle) formed on a side surface of the guide rail 2 and the rolling element rolling groove formed on an internal side surface of the slider 3 in such a manner as to face the rolling element groove on the guide rail 2 and a plurality of rolling elements 5 inserted into the rolling element rolling path 4 in such a manner as to roll freely therein, whereby the slider 3 is made to shift relatively along longitudinal direction of the guide rail 2.

In addition, the slider 3 is configured to include a slider main body 3a having a rolling element return path 6 which passes through the slider main body 3a between end faces thereof and end caps 3b made from a resin (that is, a resin having an izod impact strength with notch of 10.5 kJ/m² or more) which each have a curved direction turning path adapted to connect the corresponding rolling element rolling path 4 with the rolling element return path 6 and which are fixed to end faces of the slider main body 3a, respectively.
As a material for the end caps 3b, for example, when POM is used, Delrin 100 from DuPont or products in similar models or similar products can be raised.

Additionally, a scoop-up portion 7 for scooping up the rolling elements is formed on the end cap 3b so as to guide the rolling elements 5 which roll in the rolling element rolling path 4 into the rolling element return path 6 in a smooth fashion.
In this way, in the linear guide apparatus of this embodiment, since the end caps 3b are made from the resin having the izod impact strength with notch of 10.5 kJ/m² or more, the occurrence of damages such as chipping or cracking to the end caps 3b can be prevented, thereby making it possible to enhance the durability of the end caps 3b when the linear guide apparatus is driven at high speeds.
In addition, in this embodiment, while the example is described in which the rolling element rolling groove is provided in the vicinity of a central portion of the side surface of the guide rail 2, the invention is not limited thereto. For example, as shown in Fig. 2, rolling element rolling grooves may be provided in two upper and lower locations on the side surface of the guide rail 2, for example.

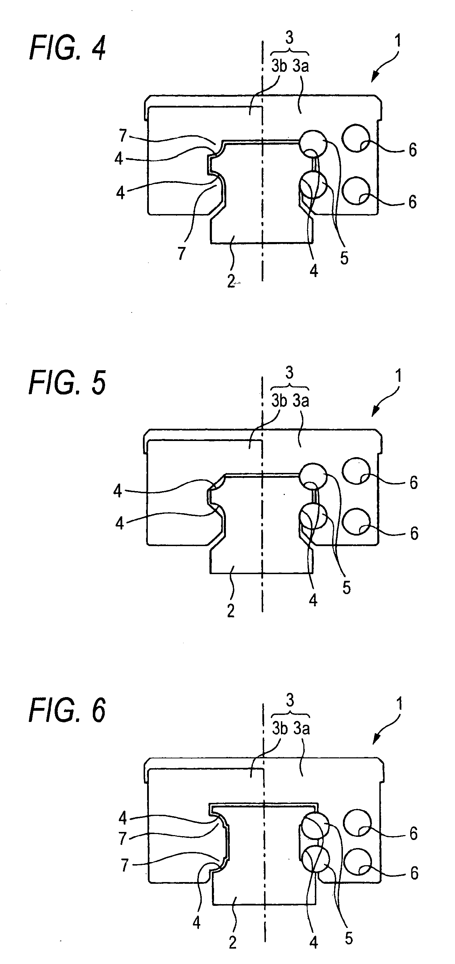

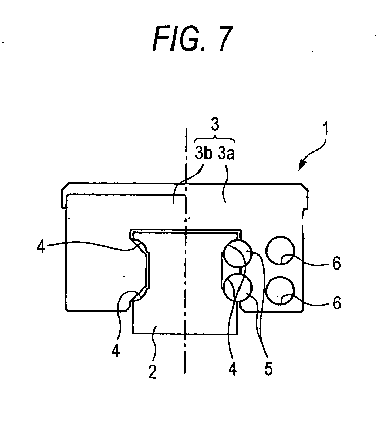

Additionally, in a case where rolling element rolling grooves are provided in two upper and lower locations on the side surface of the guide rail 2, for example, as shown in Figs. 3 to 7, at least either of the two upper and lower rolling element rolling grooves may be formed to have a cross section which is formed substantially into an arc shape of quarter of a circle. By adopting this configuration, the rolling element rolling groove on the slider main body 3a is formed to have a cross section which is formed substantially into an arc shape of three-quarter of a circle, so as to increase the holding amount of the rolling elements by the slider main body 3a, whereby the rolling elements 5 can be guided smoothly into the rolling element return path 6 from the rolling element rolling path 4, thereby making it possible to reduce impact to the scoop-up portion 7 (with an end cap 3b having no scoop-up portion 7 formed thereon, impact to the end cap 3b). In addition, as shown in Figs. 3, 4 and 6, since the protruding amount of the scoop-up portion 7 can be decreased, bending stress can be decreased which would otherwise be produced when the scoop-up portion 7 is struck by the rolling elements 5.

### <Example>

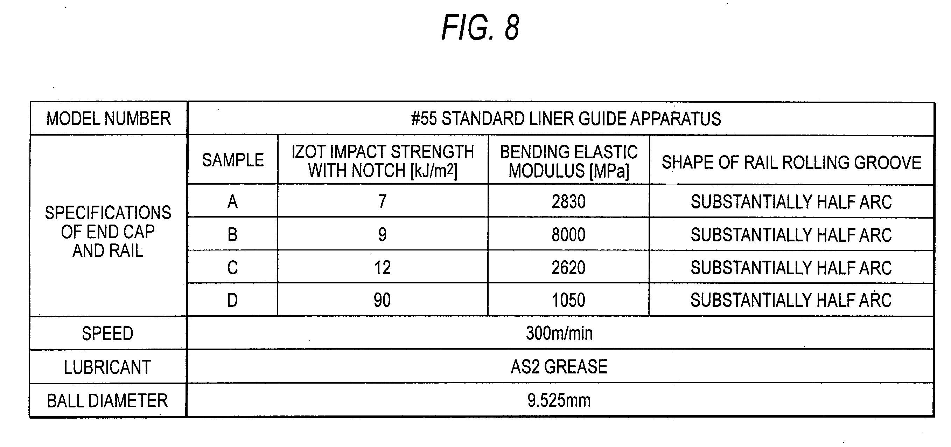

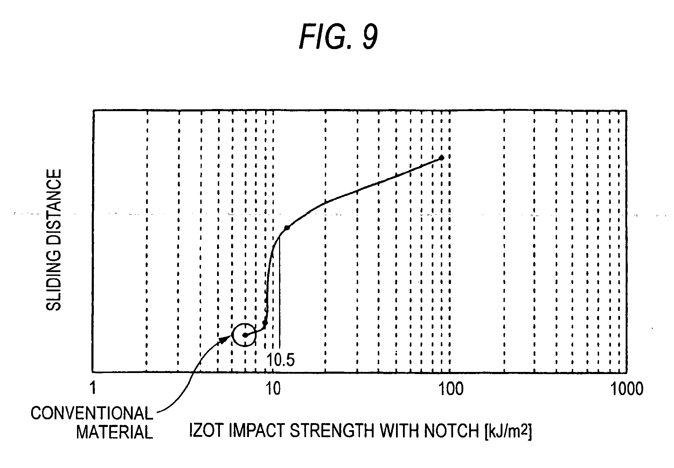

Next, the results of a sliding distance test in which the linear guide apparatus according to the embodiment was driven at high speeds will be described based on the drawings.
Firstly, as shown in Fig. 8, #55 standard linear guide apparatuses were made by employing four types of resin end caps having different izod impact strength with notch (that is, resin end caps having, respectively, izod impact strength with notch of 7kJ/m², 9kJ/m², 12kJ/m², 90kJ/m²) and a test was carried out in which sliding distances of sliders were measured until the end caps were broken, whereby the sliders were unable to slide any longer under test conditions in which the sliding speed was 300 m/min, an AS2 grease was used as a lubricant, rolling elements having a diameter of 9.525 mm were used, and the temperature was 23°C. Fig. 9 is a graph showing the result of analysis of the test results in the form of a relationship between izod impact strengths with notch of the respective end caps and sliding distances of the respective sliders.

According to the graph, it is seen that the sliding distance of the slider starts to increase drastically as the izod impact strength with notch of the resin of the end cap increases substantially from a point where the izod impact strength with notch of 9kJ/m² is surpassed and becomes sufficiently when the izod impact strength with notch has reached 10.5kJ/m².
In addition, similarly, it is seen that when the izod impact strength with notch surpasses 10.5kJ/m², the increase in sliding distance of the slider reaches a saturated state and that the sliding distance is not increased so much as the increase in izod impact strength with notch.
In addition, in this case, since deformation becomes easy to be produced when the end caps are fixed with machine screws with a small bending elastic modulus, a bending elastic modulus of 2,000 MPa or greater is desirable.

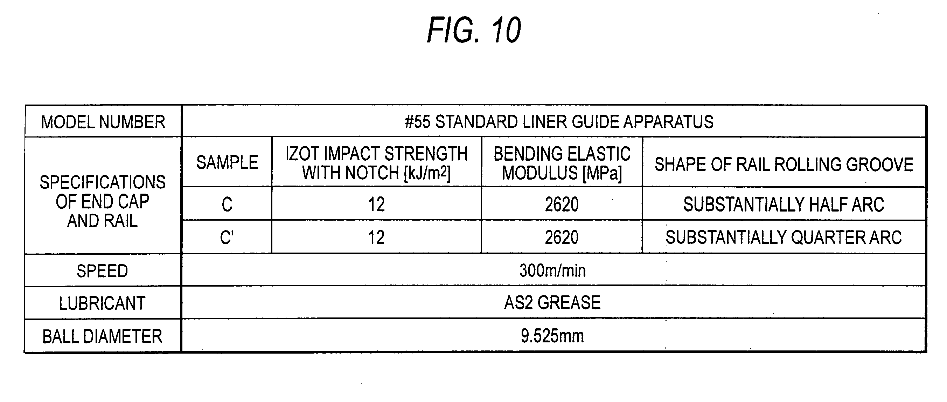

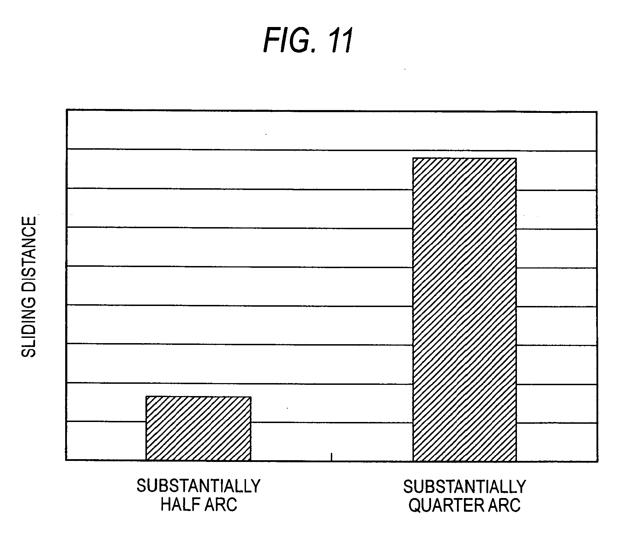

In addition, as shown in Fig. 10, a test was carried out on #55 standard linear guide apparatuses which were made up of end caps of izod impact strength with notch of 12kJ/m² (10.5 kJ/m² or greater) and guide rails having rolling element rolling grooves which are different in shape (that is, guide rails having rolling element rolling grooves which are formed to have cross sections which are formed substantially into arc shapes of a half and quarter of a circle, respectively) in which sliding distances of sliders were measured until the end caps were broken, whereby the sliders were unable to slide any longer under test conditions in which the sliding speed was 300 m/min, an AS2 grease was used as a lubricant, rolling elements having a diameter of 9.525 mm were used, and the temperature was 23°C. Fig. 11 is a graph showing the result of analysis of the test results in the form of a relationship between the shapes of the respective rolling element rolling grooves and sliding distances of the respective sliders.
Namely, it is seen that the end caps are made more difficult to be damaged with the rolling element rolling groove of the ark-like shape of quarter of a circle than the rolling element rolling groove of the ark-like shape of a half of a circle.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. A linear guide apparatus comprising:
a guide rail;
a slider main body which slides along the guide rail;
end caps fixed to end faces of the slider main body;
a rolling element circulating path comprising:
a rolling element rolling path comprising:
a first rolling element rolling groove formed on a side surface of the guide rail; and
a second rolling element rolling groove formed on the slider main body in such a manner as to face the rolling element rolling groove,
a rolling element return path passing through the slider main body between the end faces thereof; and
a direction turning path formed on each of the end caps so as to establish a connect the rolling element rolling path with the rolling element return path; and
a plurality of rolling elements which are rollably inserted in the rolling element circulating, wherein
the end caps are made from a resin whose izod impact strength with notch is 10.5 kJ/m² or more.

2. The linear guide apparatus as set forth in Claim 1,
wherein
the first rolling element rolling groove formed on the side surface of the guide rail has a cross section which is substantially an arc shape of quarter of a circle.

3. An end cap for a linear guide apparatus which comprises:
a guide rail;
a slider main body which slides along the guide rail;
end caps fixed to end faces of the slider main body;
a rolling element circulating path comprising:
a rolling element rolling path comprising:
a first rolling element rolling groove formed on a side surface of the guide rail; and
a second rolling element rolling groove formed on the slider main body in such a manner as to face the rolling element rolling groove,
a rolling element return path passing through the slider main body between the end faces thereof; and
a direction turning path formed on each of the end caps so as to establish a connect the rolling element rolling path with the rolling element return path; and
a plurality of rolling elements which are rollably inserted in the rolling element circulating,
the end cap being made from a resin whose izod impact strength with notch is 10.5 kJ/m² or more.

4. An end cap for a liner guide apparatus,
wherein the end cap is made from a resin whose izod impact strength with notch is 10.5 kJ/m² or more.
